# EUROPEAN PATENT SPECIFICATION

(11) **EP 4 227 831 B1**
(45) Date of publication and mention of the grant of the patent: **18.06.2025**
(21) Application number: 22213340.7
(22) Date of filing: 14.12.2022
(51) Int. Cl.: G06F 21/32, G06F 21/35, H04W 12/33, G06Q 20/32, G06Q 20/36

(54) **AUTHENTICATION METHOD PERFORMED THROUGH WALLET CONNECTION INTERFACE, AUTHENTICATION SYSTEM, AND COMPUTER READABLE STORAGE MEDIUM**
ÜBER EINE GELDBÖRSENVERBINDUNGSSCHNITTSTELLE DURCHGEFÜHRTES AUTHENTIFIZIERUNGSVERFAHREN, AUTHENTIFIZIERUNGSSYSTEM UND COMPUTERLESBARES SPEICHERMEDIUM
PROCÉDÉ D'AUTHENTIFICATION EFFECTUÉ PAR L'INTERMÉDIAIRE D'UNE INTERFACE DE CONNEXION DE PORTEFEUILLE, SYSTÈME D'AUTHENTIFICATION ET SUPPORT D'INFORMATIONS LISIBLE PAR ORDINATEUR

(30) Priority: 15.02.2022 US 202263310111 P
(43) Date of publication of application: 16.08.2023
(73) Proprietor: HTC Corporation, Taoyuan City 330, (TW)
(72) Inventor: YU, Han-Kuan, 330 Taoyuan City (TW); LIU, Ming-Te, 330 Taoyuan City (TW); LIN, Guo Chao, 330 Taoyuan City (TW); CHUANG, Meng-Hsi, 330 Taoyuan City (TW)
(74) Representative: Klang, Alexander H.

(56) References cited:
- US-A1- 2018 052 324
- US-A1- 2020 228 524
- LUX ZOLTAN ANDRAS ET AL: "Distributed-Ledger-based Authentication with Decentralized Identifiers and Verifiable Credentials", 2020 2ND CONFERENCE ON BLOCKCHAIN RESEARCH & APPLICATIONS FOR INNOVATIVE NETWORKS AND SERVICES (BRAINS), IEEE, 28 September 2020 (2020-09-28), pages 71 - 78, XP033841345, DOI: 10.1109/BRAINS49436.2020.9223292

## Description

### CROSS-REFERENCE TO RELATED APPLICATION

This application claims the priority benefit of U.S. provisional application serial no. 63/310,111, filed on February 15, 2022.

### BACKGROUND

### 1. Field of the Invention

The present disclosure generally relates to an authentication mechanism, in particular, to an authentication method performed through a wallet connection interface, an authentication system, and a computer readable storage medium.

### 2. Description of Related Art

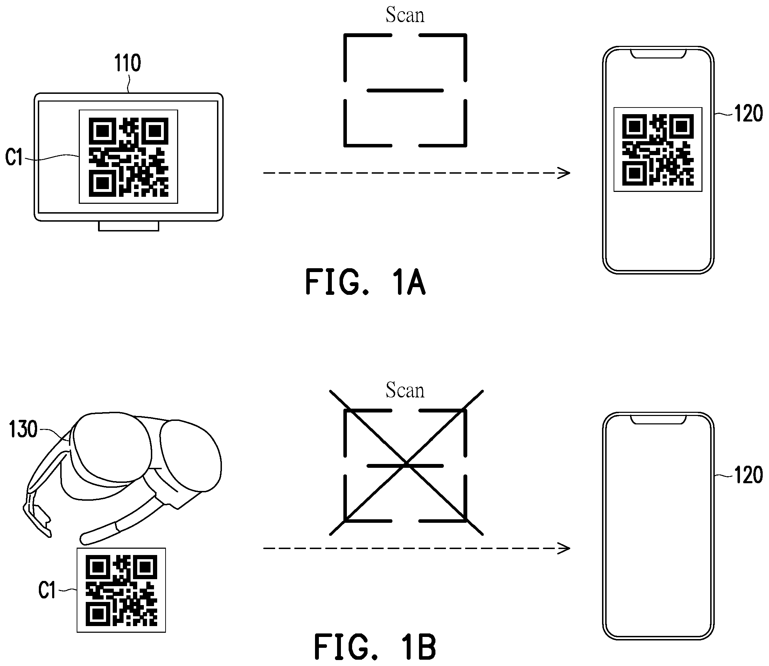

See FIG. 1A, which shows a scenario of scanning information shown on an electronic device by using a smart device. In some scenarios (e.g., authentications for mobile payment, adding friends on communication applications), the electronic device 110 (e.g., a laptop) may show information such as the quick response (QR) code C1 for the user to scan with the smart device 120 (e.g., using the camera of the smart device 120 to shoot the QR code C1). Since the QR code C1 is shown on the display of the electronic device 110, it would be easy for the user to scan the QR code C1 with the smart device 120, and the smart device 120 can use the information in the QR code C1 to perform subsequent operations, such authenticating the user.

However, if the QR code C1 is shown on a particular display which is difficult for the smart device 120 to scan, the mechanism in FIG. 1A cannot be used for the smart device 120 to obtain the information in the QR code C1.

See FIG. 1B, which shows a scenario of providing scannable information on a wearable device. In FIG. 1B, the wearable device 130 may be, for example, a head-mounted display (HMD) using a near eye display to show visual contents (e.g., virtual reality (VR) contents) for the wearer to see. In this case, if the wearable device 130 shows the QR code C1 in the provided visual content, it would be difficult for the user to scan the QR code C1 with the smart device 120 since the QR code C1 is shown by the near eye display of the wearable device 130.

Therefore, a new mechanism has to be designed for solving the above problem. Attention is drawn to US 2020/228524 A1 describing techniques for secure authentication in virtual reality. A virtual reality application executing on a virtual reality device can provide virtual reality environment. The virtual reality application may communicate with a server that provides a plurality of objects for display in the VR environment. The environment can include an object that, once selected, may initiate an authentication process. Once initiated, an authentication application may be launched on the VR device, so that a private authentication environment may be provided to the user. The user may be prompted to provide a biometric sample using one or more input devices coupled to the VR device. The biometric sample can then be sent to the authentication server, so that an authentication result may be determined from a comparison of the sample to a biometric template established during registration.
Further attention is drawn to a paper by Lux Zoltan Andras et Al, entitled "Distributed-Ledger-based Authentication with Decentralized Identifiers and Verifiable Credentials", and published in 2020 2nd CONFERENCE ON BLOCKCHAIN RESEARCH & APPLICATIONS FOR INNOVATIVE NETWORKS AND SERVICES (BRAINS), IEEE, (20200928), doi:10.1109/BRAINS49436.2020.9223292, pages 71 - 78. The paper describes that authentication with username and password is becoming an inconvenient process for the user. End users typically have little control over their personal privacy, and data breaches effecting millions of users have already happened several times. The authors have implemented a proof of concept decentralized OpenID Connect Provider by marrying it with Self-Sovereign Identity, which gives users the freedom to choose from a very large pool of identity providers instead of just a select few corporations, thus enabling the democratization of the highly centralized digital identity landscape. Furthermore, the authors propose a verifiable credential powered decentralized Public Key Infrastructure using distributed ledger technologies, which creates a straightforward and verifiable way for retrieving digital certificates.
Attention is also drawn to US 2018/052324 A1 describing a virtual reality system which includes a first information processing device, a virtual reality headset, a biometric data acquisition device, a first sensor, and a second sensor. The first information processing device creates virtual reality content. The virtual reality headset is worn by the user and displays the virtual reality content received from the first information processing device to the user. The biometric data acquisition device acquires biometric data of the user. The first information processing device adds an image making the user recognize the position and the direction of the biometric data acquisition device to the virtual reality content on the basis of position and direction information created by the first sensor and the second sensor.

### SUMMARY OF THE INVENTION

The present invention is set forth in the independent claims, respectively. Further embodiments of the invention are described in the dependent claims.

Accordingly, the disclosure is directed to an authentication method performed through a wallet connection interface, an authentication system, and a computer readable storage medium, which may be used to solve the above technical problems.

The embodiments of the disclosure provide an authentication method performed through a wallet connection interface, including: in response to determining that an authentication function of an application on a wearable device is triggered by a user, generating, by the wearable device, authentication information related to the wallet connection interface; sending, by the wearable device, the authentication information to a smart device and a server corresponding to the wallet connection interface; in response to receiving the authentication information, providing, by the smart device, wallet information of a wallet application of the smart device to the server, wherein the authentication information and the wallet information are for triggering the server to make a match between the wearable device and the smart device; and in response to the wearable device determining that the wearable device has been matched with the smart device, determining, by the wearable device, that the user has been authenticated.

The embodiments of the disclosure provide an authentication system including a wearable device and a smart device. The wearable device is configured to perform: in response to determining that an authentication function of an application on a wearable device is triggered by a user, generating authentication information related to the wallet connection interface; sending the authentication information to the smart device and a server corresponding to a wallet connection interface. The smart device is coupled to the wearable device and configured to perform: in response to receiving the authentication information, providing wallet information of a wallet application of the smart device to the server, wherein the authentication information and the wallet information are for triggering the server to make a match between the wearable device and the smart device. In response to the wearable device determining that the wearable device has been matched with the smart device, the wearable device determines that the user has been authenticated.

The embodiments of the disclosure provide a computer readable storage medium, the computer readable storage medium recording an executable computer program, the executable computer program being loaded by an authentication system to perform steps of: in response to determining that an authentication function of an application on a wearable device is triggered by a user, generating authentication information related to the wallet connection interface; sending the authentication information to a smart device and a server corresponding to the wallet connection interface; in response to receiving the authentication information, providing wallet information of a wallet application of the smart device to the server, wherein the authentication information and the wallet information are for triggering the server to make a match between the wearable device and the smart device; and in response to determining that the wearable device has been matched with the smart device, determining that the user has been authenticated.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.
FIG. 1A shows a scenario of scanning information shown on an electronic device by using a smart device.
FIG. 1B shows a scenario of providing scannable information on a wearable device.
FIG. 2 shows a schematic diagram of an authentication system according to an embodiment of the disclosure.
FIG. 3 shows a flow chart of an authentication method performed through a wallet connection interface according to an embodiment of the disclosure.
FIG. 4 shows an application scenario according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

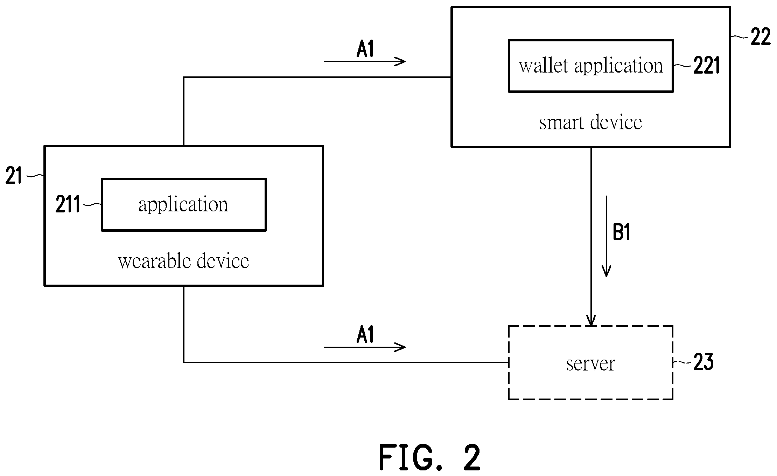

See FIG. 2, which shows a schematic diagram of an authentication system according to an embodiment of the disclosure. In FIG. 2, the authentication system 20 includes a wearable device 21 and a smart device 22. In various embodiments, the wearable device 21 can be any device that can be worn on the user thereof and show contents (e.g., the user interface) related to an application 211 for the user to see, such as augmented reality (AR) glasses and/or the HMD with the near eye display, but the disclosure is not limited thereto.

In some embodiments, the application 211 can be a decentralized application (Dapp) operated based on a block chain and can be used by the user to purchase products (e.g., such as Non-fungible token (NFT)), but the disclosure is not limited thereto.

In some embodiments, the smart device 22 can be a smart phone, a tablet or other devices that can run a wallet application 221. In some embodiments, the wallet application 221 can be a crypto wallet stored with the corresponding cryptocurrency, but the disclosure is not limited thereto.

In one embodiment, if the user wants to use the cryptocurrency in the wallet application 221 to, for example, purchase the NFT through the Dapp, the Dapp may need to ask the user to do some operation for authenticating the user.

Conventionally, if the Dapp is run on a device such as the electronic device 110 in FIG. 1A, the Dapp can directly show the QR code C1 used for authenticating the user and ask the user to scan with the smart device 22, wherein the QR code C1 may include authentication information for triggering a server 23 related to a wallet connection interface to make a match between the electronic device 110 and the smart device 22 via the wallet connection interface.

However, in the embodiments where the wearable device 21 is, for example, the HMD, it would be difficult for the smart device 22 to scan the QR code C1, which makes the server 23 incapable of making a match between the wearable device 21 and the smart device 22. In this case, the user would not be allowed to use the crypto currency in the wallet application 221 to, for example, purchase the NFT through the Dapp.

Therefore, the embodiments of the disclosure provide a solution for the wearable device 21 and the smart device 22 to exchange the authentication information in a novel way, such that the server 23 can make a match between the wearable device 21 and the smart device 22 even if the wearable device 21 cannot provide the authentication information in a scannable form. Details would be introduced in the following.

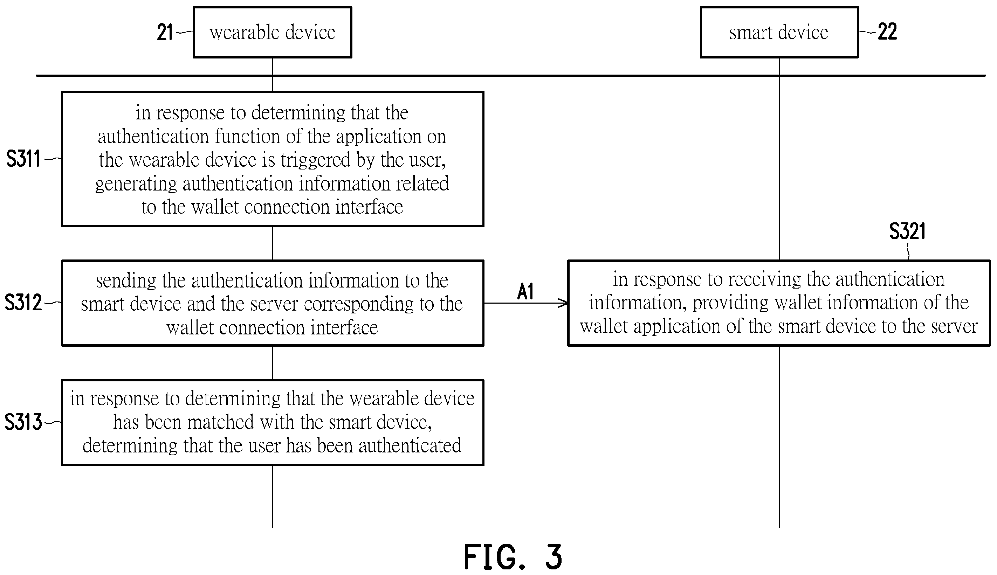

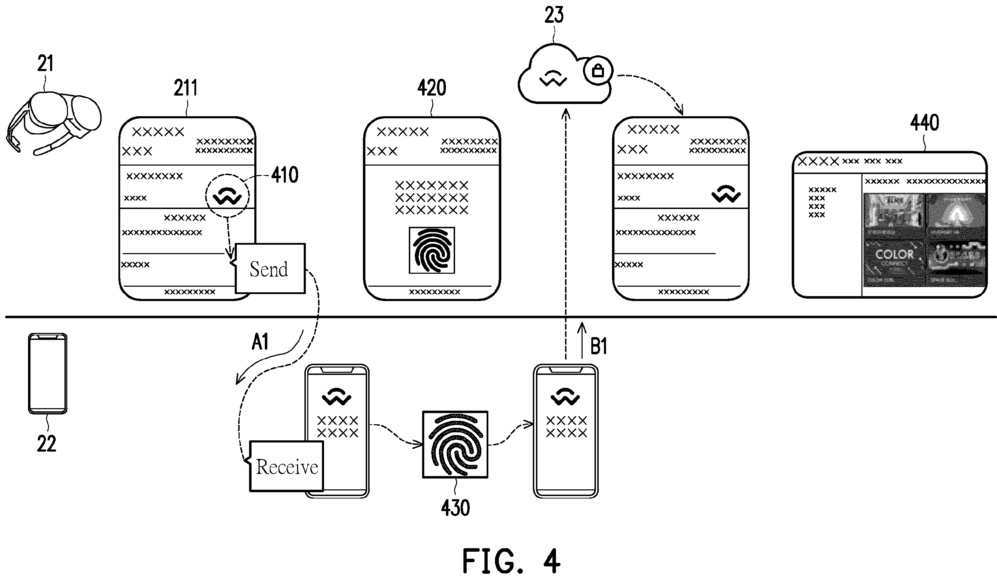

See FIG. 3, which shows a flow chart of an authentication method performed through a wallet connection interface according to an embodiment of the disclosure. The method of this embodiment may be executed by the wearable device 21 and the smart device 22 in FIG. 2, and the details of each step in FIG. 3 will be described below with the components shown in FIG. 2. For better explaining the concept of the disclosure, FIG. 4 would be used as an illustrative example, wherein FIG. 4 shows an application scenario according to an embodiment of the disclosure.

In the scenario of FIG. 4, when the user of the wearable device 21 wants to, for example, login the application 211 (which may be a Dapp) to purchase products (e.g., NFT), the user may trigger an authentication function of the application 211 via selecting an icon 410 with, for example, a hand gesture recognized by the wearable device 21 or a handheld controller connected to the wearable device 21, but the disclosure is not limited thereto.

In step S311, in response to determining that the authentication function of the application 211 on the wearable device 21 is triggered by the user, the wearable device 21 generates authentication information A1 related to the wallet connection interface. In the embodiments of the disclosure, the considered wallet connection interface can be, for example, a WalletConnect interface or other interface capable of connecting the application 211 with the wallet application 221, but the disclosure is not limited thereto. For better understanding the disclosure, the WalletConnect would be used as an example of the wallet connection interface in the following embodiments.

In one embodiment, the authentication information A1 may include a unique identifier and a server address of the server 23 (e.g., a WalletConnect server), but the disclosure is not limited thereto.

In step S312, the wearable device 21 sends the authentication information A1 to the smart device 22 and the server 23 corresponding to the wallet connection interface.

In one embodiment, the authentication information A1 can transmitted to the smart device 22 in a form of a deep link corresponding to the wallet application. In one embodiment, the deep link may be a string started with "wc:" and include data fields corresponding to the authentication information A1 (e.g., the unique identifier and the server address of the server 23), but the disclosure is not limited thereto.

In one embodiment, after sending the authentication information A1 to the smart device 22 and the server 23, the wearable device 21 may wait for the user to provide identification information (e.g., a fingerprint 430 of the user) to the smart device 22 and show a waiting interface 420 while waiting, but the disclosure is not limited thereto.

Correspondingly, the smart device 22 may receive the authentication information A1 from the wearable device 21. In one embodiment, for facilitating the transmission of the authentication information A1 between the wearable device 21 and the smart device 22, the wearable device 21 and the smart device 22 can be designed with corresponding transmission modules/circuits (which can be understood as corresponding to the box labeled as "Send" in FIG. 4). For example, the wearable device 21 can be designed with a transmitting circuit (e.g., a Bluetooth module) for transmitting the authentication information A1 in response to the generated authentication information A1. Correspondingly, the smart device 22 can be designed with a receiving circuit (e.g., a Bluetooth module, which can be understood as corresponding to the box labeled as "Receive" in FIG. 4)) for receiving the authentication information A1 from the wearable device 21, but the disclosure is not limited thereto.

Specifically, since the conventionally generated authentication information can be shown in a scannable form (e.g., the QR code C1) for scanning, the device (e.g., the electronic device 110) generating authentication information does not need to additionally send the generated authentication information to, for example, the smart device 22.

On the contrary, since the wearable device 21 may not characterize the authentication information A1 in a scannable form, the wearable device 21 can send the authentication information A1 to the smart device 22 via the transmitting circuit in response to the authentication function and/or the authentication information A1. That is, the wearable device 21 provides the authentication information A1 to the smart device 22 in a novel way.

In step S321, in response to receiving the authentication information A1, the smart device 22 provides wallet information B1 of the wallet application 221 of the smart device 22 to the server 23. In one embodiment, the wallet information B1 may include a public address of the wallet application 221 of the smart device 22.

In one embodiment, the smart device 22 may send the wallet information B1 of the wallet application 221 to the server 23 based on the unique identifier and the server address of the server 23.

In one embodiment, before providing the wallet information B1 of the wallet application 221 of the smart device 22 to the server 23, the smart device 22 may requesting the user to provide identification information to the smart device 22. For example, the smart device 22 may request the user to input a biometric identification (e.g., the fingerprint 430) to the smart device 22, but the disclosure is not limited thereto.

In response to determining that the identification information has been verified, the smart device 22 can provide, the wallet information B1 of the wallet application 221 of the smart device 22 to the server 23. On the other hand, in response to determining that the identification information has not been verified, the smart device 22 may not provide the wallet information B1 of the wallet application 221 of the smart device 22 to the server 23 and inform the user that the authentication has failed, but the disclosure is not limited thereto.

In one embodiment, the authentication information A1 and the wallet information B1 can trigger the server 23 to make a match between the wearable device 21 and the smart device 22. In the embodiment where the server 23 is a WalletConnect server, the details of the operations of making a match between the wearable device 21 and the smart device 22 can be referred to the specification of WalletConnect, and the details of the required authentication information A1 and the wallet information B1 can be also referred to the specification of WalletConnect, but the disclosure is not limited thereto.

In one embodiment, the server 23 may inform the wearable device 21 that the wearable device 21 has been matched with the smart device 22 via, for example, signed messages defined in the specification of WalletConnect.

Accordingly, in step S313, in response to determining that the wearable device 21 has been matched with the smart device 22, the wearable device 21 determines that the user has been authenticated.

In one embodiment, after receiving, for example, the signed messages defined in the specification of WalletConnect from the server 23, the wearable device 21 may determine that the wearable device 21 has been matched with the smart device 22, but the disclosure is not limited thereto.

In one embodiment, once the user has been authenticated, the wearable device 21 may allow the user to, for example, login the application 211 to perform a transaction via the wallet application 221. For example, the wearable device 21 may allow the user to purchase products such as NFT in the user interface 440 of the application 211, but the disclosure is not limited thereto.

In one embodiment, the method in FIG. 3 can be performed whenever the user wants to purchase products via the application 211. For example, when the user determines to checkout with the selected products, the wearable device 21 may show the icon 410 in the user interface of the application 211. Once the user triggers the icon 410, the steps in FIG. 3 can be executed again for authenticating the user. After determining that the user has been authenticated, the user can be allowed to use the cryptocurrency in the wallet application 221 to pay for the selected products in the application 211, but the disclosure is not limited thereto.

The disclosure further provides a computer readable storage medium for executing the authentication method. The computer readable storage medium is composed of a plurality of program instructions (for example, a setting program instruction and a deployment program instruction) embodied therein. These program instructions can be loaded into the wearable device 21 and the smart device 22 and executed by the same to execute the authentication method and the functions of the wearable device 21 and the smart device 22 described above.

In summary, the embodiments of the disclosure provide a solution for the wearable device to send the authentication information to the smart device in response to determining that the authentication function of the application (e.g., a Dapp) has been triggered. Accordingly, the authentication information can be successfully provided to the smart device even if the authentication information cannot be characterized in a scannable form (e.g., a QR code).

It will be apparent to those skilled in the art that various modifications and variations can be made to the structure of the present invention without departing from the scope of the disclosure. In view of the foregoing, it is intended that the present disclosure cover modifications and variations of this invention provided they fall within the scope of the following claims.

## Claims

1. An authentication method performed through a wallet connection interface, comprising:
in response (S311) to determining that an authentication function of an application (211) on a wearable device (21) is triggered by a user, generating, by the wearable device, authentication information (A1) related to the wallet connection interface;
sending (S312), by the wearable device, the authentication information (A1) to a smart device (22) and a server (23) corresponding to the wallet connection interface;
in response (S321) to receiving the authentication information, providing, by the smart device, wallet information (B1) of a wallet application (221) of the smart device to the server, wherein the authentication information and the wallet information are for triggering the server to make a match between the wearable device and the smart device; and
in response (S313) to the wearable device determining that the wearable device has been matched with the smart device, determining, by the wearable device, that the user has been authenticated;
wherein the authentication information comprises a unique identifier and a server address of the server; and
wherein the step of providing the wallet information of the wallet application of the smart device to the server comprises:
sending, by the smart device, the wallet information of the wallet application to the server based on the unique identifier and the server address of the server.

2. The method according to claim 1, wherein the wallet information comprises a public address of the wallet application of the smart device.

3. The method according to claim 1, wherein the authentication information is transmitted in a form of a deep link corresponding to the wallet application.

4. The method according to claim 1, wherein after the step of sending the authentication information to the smart device and the server corresponding to the wallet connection interface, the method further comprises:
waiting, by the wearable device, for the user to provide identification information to the smart device.

5. The method according to claim 1, wherein before the step of providing the wallet information of the wallet application of the smart device to the server, the method further comprises:
requesting, by the smart device, the user to provide identification information to the smart device;
in response to determining that the identification information has been verified, providing, by the smart device, the wallet information of the wallet application of the smart device to the server;
in response to determining that the identification information has not been verified, not providing, by the smart device, the wallet information of the wallet application of the smart device to the server.

6. The method according to claim 5, wherein the step of requesting the user to provide identification information to the smart device comprises:
requesting, by the smart device, the user to input a biometric identification to the smart device.

7. The method according to claim 1, further comprising:
showing, by the wearable device, a user interface of the application via a near eye display of the wearable device.

8. The method according to claim 1, wherein the application is a decentralized application operated based on a block chain.

9. The method according to claim 8, wherein after the step of determining that the user has been authenticated, the method further comprises:
allowing, by the wearable device, the user to perform a transaction via the wallet application.

10. The method according to claim 8, wherein the wallet application is a crypto wallet.

11. An authentication system, comprising:
a wearable device (21), configured to perform:
in response (S311) to determining that an authentication function (A1) of an application (211) on a wearable device is triggered by a user, generating authentication information related to a wallet connection interface;
sending (S312) the authentication information to the smart device and a server (23) corresponding to a wallet connection interface;
a smart device, coupled to the wearable device and configured to perform:
in response to receiving the authentication information, providing wallet information of a wallet application of the smart device to the server, wherein the authentication information and the wallet information are for triggering the server to make a match between the wearable device and the smart device;
wherein in response to the wearable device determining that the wearable device has been matched with the smart device, the wearable device determines that the user has been authenticated; and
wherein the authentication information comprises a unique identifier and a server address of the server, and the smart device sends the wallet information of the wallet application to the server based on the unique identifier and the server address of the server.

12. A non-transitory computer readable storage medium, the computer readable storage medium recording an executable computer program, the executable computer program being loaded by an authentication system to perform steps of:
in response to determining that an authentication function of an application on a wearable device is triggered by a user, generating authentication information related to a wallet connection interface;
sending the authentication information to a smart device and a server corresponding to the wallet connection interface;
in response to receiving the authentication information, providing wallet information of a wallet application of the smart device to the server, wherein the authentication information and the wallet information are for triggering the server to make a match between the wearable device and the smart device; and
in response to determining that the wearable device has been matched with the smart device, determining that the user has been authenticated;
wherein the authentication information comprises a unique identifier and a server address of the server; and
wherein the step of providing the wallet information of the wallet application of the smart device to the server comprises:
sending, by the smart device, the wallet information of the wallet application to the server based on the unique identifier and the server address of the server.

## Patentansprüche

1. Ein Authentifizierungsverfahren, das über eine Wallet-Verbindungsschnittstelle ausgeführt wird, das Folgendes aufweist:
in Reaktion (S311) auf Feststellen, dass eine Authentifizierungsfunktion einer Anwendung (211) auf einem tragbaren, bzw. Wearable, Gerät (21) von einem Benutzer ausgelöst wird, Erzeugen von Authentifizierungsinformationen (A1) durch das tragbare Gerät, die sich auf die Wallet-Verbindungsschnittstelle beziehen;
Senden (S312) der Authentifizierungsinformationen (A1) durch das tragbare Gerät an ein intelligentes Gerät bzw. Smart-Gerät (22) und einen Server (23), die der Wallet-Verbindungsschnittstelle entsprechen;
als Reaktion (S321) auf Empfangen der Authentifizierungsinformationen, Bereitstellen, durch das Smart-Gerät, von Wallet-Informationen (B1) einer Wallet-Anwendung (221) des Smart-Geräts an den Server, wobei die Authentifizierungsinformationen und die Wallet-Informationen dazu dienen, den Server dazu zu veranlassen, eine Übereinstimmung zwischen dem tragbaren Device und dem Smart-Gerät herzustellen; und
als Reaktion (S313) auf die Feststellung des tragbaren Geräts, dass das tragbare Gerät mit dem intelligenten Gerät abgeglichen wurde, Feststellen durch das tragbare Gerät, dass der Benutzer authentifiziert wurde;
wobei die Authentifizierungsinformationen einen eindeutigen Identifikator und eine Serveradresse des Servers aufweisen; und
wobei der Schritt des Bereitstellens der Wallet-Informationen der Wallet-Anwendung des intelligenten Geräts an den Server Folgendes aufweist:
Senden der Wallet-Informationen der Wallet-Anwendung durch das Smart-Gerät an den Server auf der Grundlage des eindeutigen Identifikators und der Serveradresse des Servers.

2. Das Verfahren gemäß Anspruch 1, wobei die Wallet-Informationen eine öffentliche Adresse der Wallet-Anwendung des Smart-Geräts aufweisen.

3. Das Verfahren gemäß Anspruch 1, wobei die Authentifizierungsinformationen in Form eines Deep Link entsprechend der Wallet-Anwendung übertragen werden.

4. Das Verfahren gemäß Anspruch 1, wobei das Verfahren nach dem Schritt des Sendens der Authentifizierungsinformationen an das Smart-Gerät und den Server, die der Wallet-Verbindungsschnittstelle entsprechen ferner Folgendes aufweist:
Warten, durch das tragbare Gerät, bis der Benutzer Identifikationsinformationen an das Smart-Gerät übermittelt.

5. Das Verfahren gemäß Anspruch 1, wobei das Verfahren vor dem Schritt des Bereitstellens der Wallet-Informationen der Wallet-Anwendung des Smart-Geräts an den Server ferner Folgendes aufweist:
Auffordern, durch das intelligente Gerät, des Benutzers Identifikationsinformationen an das intelligente Gerät zu übermitteln;
als Reaktion auf die Feststellung, dass die Identifikationsinformationen verifiziert wurden, Bereitstellung der Wallet-Informationen der Wallet-Anwendung des intelligenten Geräts durch das intelligente Gerät an den Server;
als Reaktion auf Feststellen, dass die Identifikationsinformationen nicht verifiziert wurden, keine Bereitstellung der Wallet-Informationen der Wallet-Anwendung des intelligenten Geräts durch das intelligente Gerät an den Server.

6. Das Verfahren gemäß Anspruch 5, wobei der Schritt des Aufforderns des Benutzers, Identifikationsinformationen an das Smart-Gerät zu übermitteln, Folgendes aufweist:
Auffordern, durch das Smart-Gerät, des Benutzers eine biometrische Identifikation in das Smart-Gerät einzugeben.

7. Das Verfahren gemäß Anspruch 1, das ferner aufweist:
Anzeigen einer Benutzerschnittstelle der Anwendung durch das tragbare Gerät über ein Near-Eye-Display des tragbaren Geräts.

8. Das Verfahren gemäß Anspruch 1, wobei die Anwendung eine dezentralisierte Anwendung ist, die auf der Grundlage einer Blockkette betrieben wird.

9. Das Verfahren gemäß Anspruch 8, wobei das Verfahren nach dem Schritt des Feststellens, dass der Benutzer authentifiziert wurde, ferner aufweist:
Ermöglichen, durch das tragbare Gerät, dem Benutzer eine Transaktion über die Wallet-Anwendung durchzuführen.

10. Das Verfahren gemäß Anspruch 8, wobei die Wallet-Anwendung eine Krypto-Wallet ist.

11. Ein Authentifizierungssystem, das Folgendes aufweist:
ein tragbares Gerät (21), konfiguriert, um Folgendes auszuführen:
in Reaktion (S311) auf Feststellen, dass eine Authentifizierungsfunktion (A1) einer Anwendung (211) auf einem tragbaren, bzw. Wearable, Gerät von einem Benutzer ausgelöst wird, Erzeugen von Authentifizierungsinformationen, die sich auf eine Wallet-Verbindungsschnittstelle beziehen;
Senden (S312) der Authentifizierungsinformationen an das intelligente Gerät bzw. Smart-Gerät und einen Server (23), die einer Wallet-Verbindungsschnittstelle entspricht;
ein Smart-Gerät, das mit dem tragbaren Device gekoppelt und so konfiguriert ist, dass es Folgendes ausführt:
als Reaktion auf Empfangen der Authentifizierungsinformationen dem Server Wallet-Informationen einer Wallet-Anwendung des Smart-Geräts bereitstellt, wobei die Authentifizierungsinformationen und die Wallet-Informationen dazu dienen, den Server dazu zu veranlassen, eine Übereinstimmung zwischen dem Wearable Device und dem Smart-Gerät herzustellen;
wobei das tragbare Gerät als Reaktion auf das Feststellen, dass das tragbare Gerät mit dem intelligenten Gerät abgeglichen wurde, feststellt, dass der Benutzer authentifiziert wurde; und
wobei die Authentifizierungsinformationen einen eindeutigen Identifikator und eine Serveradresse des Servers aufweisen und das intelligente Gerät die Wallet-Informationen der Wallet-Anwendung basierend auf dem eindeutigen Identifikator und der Serveradresse des Servers an den Server sendet.

12. Ein nichtflüchtiges computerlesbares Speichermedium, wobei das computerlesbare Speichermedium ein ausführbares Computerprogramm aufzeichnet, wobei das ausführbare Computerprogramm von einem Authentifizierungssystem geladen wird, um die folgenden Schritte auszuführen:
als Reaktion auf Feststellen, dass eine Authentifizierungsfunktion einer Anwendung auf einem tragbaren Gerät von einem Benutzer ausgelöst wird, Erzeugen von Authentifizierungsinformationen, die sich auf eine Wallet-Verbindungsschnittstelle beziehen;
Senden der Authentifizierungsinformationen an ein intelligentes Gerät und einen Server, die der Wallet-Verbindungsschnittstelle entsprechen;
als Reaktion auf Empfangen der Authentifizierungsinformationen, Bereitstellen von Wallet-Informationen einer Wallet-Anwendung des intelligenten Geräts an den Server, wobei die Authentifizierungsinformationen und die Wallet-Informationen dazu dienen, den Server dazu zu veranlassen, eine Übereinstimmung zwischen dem tragbaren Gerät und dem intelligenten Gerät herzustellen; und
als Reaktion auf die Feststellung, dass das tragbare Gerät mit dem intelligenten Gerät abgeglichen wurde, die Feststellung, dass der Benutzer authentifiziert wurde;
wobei die Authentifizierungsinformationen einen eindeutigen Identifikator und eine Serveradresse des Servers aufweisen; und
wobei der Schritt des Bereitstellens der Wallet-Informationen der Wallet-Anwendung des intelligenten Geräts an den Server aufweist:
Senden der Wallet-Informationen der Wallet-Anwendung durch das intelligente Gerät an den Server auf der Grundlage des eindeutigen Identifikators und der Serveradresse des Servers.

## Revendications

1. Méthode d'authentification exécutée par l'intermédiaire d'une interface de connexion de portefeuille, comprenant :
en réponse (S311) à la détermination qu'une fonction d'authentification d'une application (211) sur un dispositif portable (21) est déclenchée par un utilisateur, générer, par le dispositif portable, des informations d'authentification (A1) liées à l'interface de connexion de portefeuille ;
envoyer (S312), par le dispositif portable, les informations d'authentification (A1) à un dispositif intelligent (22) et à un serveur (23) correspondant à l'interface de connexion au portefeuille ;
en réponse (S321) à la réception des informations d'authentification, fournir, par le dispositif intelligent, des informations de portefeuille (B1) d'une application de portefeuille (221) du dispositif intelligent au serveur, dans lequel les informations d'authentification et les informations de portefeuille sont destinées à déclencher le serveur pour établir une correspondance entre le dispositif portable et le dispositif intelligent ; et
en réponse (S313) à la détermination par le dispositif portable que le dispositif portable a été mis en correspondance avec le dispositif intelligent, déterminer, par le dispositif portable, que l'utilisateur a été authentifié ;
dans lequel les informations d'authentification comprennent un identifiant unique et une adresse de serveur ; et
dans lequel l'étape consistant à fournir au serveur les informations relatives au portefeuille de l'application de portefeuille de l'appareil intelligent comprend :
l'envoi, par le dispositif intelligent, des informations de portefeuille de l'application de portefeuille au serveur sur la base de l'identifiant unique et de l'adresse du serveur.

2. Procédé selon la revendication 1, dans lequel les informations sur le portefeuille comprennent une adresse publique de l'application de portefeuille du dispositif intelligent.

3. Procédé selon la revendication 1, dans lequel les informations d'authentification sont transmises sous la forme d'un lien profond correspondant à l'application de portefeuille.

4. Procédé selon la revendication 1, dans lequel après l'étape d'envoi des informations d'authentification au dispositif intelligent et au serveur correspondant à l'interface de connexion du portefeuille, le procédé comprend en outre :
l'attente, par le dispositif portable, que l'utilisateur fournisse des informations d'identification au dispositif intelligent.

5. Procédé selon la revendication 1, dans lequel, avant l'étape consistant à fournir au serveur les informations relatives au portefeuille de l'application de portefeuille du dispositif intelligent, le procédé consiste en outre à :
demander, par le dispositif intelligent, à l'utilisateur de fournir des informations d'identification au dispositif intelligent ;
en réponse à la détermination que les informations d'identification ont été vérifiées, fournir, par le dispositif intelligent, les informations de portefeuille de l'application de portefeuille du dispositif intelligent au serveur ;
après avoir déterminé que les informations d'identification n'ont pas été vérifiées, ne pas fournir au serveur, par le dispositif intelligent, les informations de portefeuille de l'application de portefeuille du dispositif intelligent.

6. Procédé selon la revendication 5, dans lequel l'étape consistant à demander à l'utilisateur de fournir des informations d'identification au dispositif intelligent comprend :
demander, par le dispositif intelligent, à l'utilisateur d'entrer une identification biométrique dans le dispositif intelligent.

7. La méthode selon la revendication 1, comprenant en outre :
l'affichage, par le dispositif portable, d'une interface utilisateur de l'application via un écran proche de l'œil du dispositif portable.

8. La méthode selon la revendication 1, dans laquelle l'application est une application décentralisée exploitée sur la base d'une chaîne de blocs.

9. La méthode selon la revendication 8, dans laquelle après l'étape de détermination que l'utilisateur a été authentifié, la méthode comprend en outre :
permettre, par le dispositif portable, à l'utilisateur d'effectuer une transaction via l'application de portefeuille.

10. Méthode selon la revendication 8, dans laquelle l'application de portefeuille est un portefeuille cryptographique.

11. Système d'authentification comprenant
un dispositif portable (21), configuré pour effectuer :
en réponse (S311) à la détermination qu'une fonction d'authentification (A1) d'une application (211) sur un dispositif portable est déclenchée par un utilisateur, générer des informations d'authentification liées à une interface de connexion de portefeuille ;
envoyer (S312) les informations d'authentification au dispositif intelligent et à un serveur (23) correspondant à une interface de connexion de portefeuille ;
un dispositif intelligent, couplé au dispositif portable et configuré pour effectuer :
en réponse à la réception des informations d'authentification, fournir des informations de portefeuille d'une application de portefeuille du dispositif intelligent au serveur, dans lequel les informations d'authentification et les informations de portefeuille sont destinées à déclencher le serveur pour établir une correspondance entre le dispositif portable et le dispositif intelligent ;
dans lequel, en réponse à la détermination par le dispositif portable de la correspondance entre le dispositif portable et le dispositif intelligent, le dispositif portable détermine que l'utilisateur a été authentifié ; et
dans lequel les informations d'authentification comprennent un identifiant unique et une adresse de serveur, et le dispositif intelligent envoie les informations de portefeuille de l'application de portefeuille au serveur sur la base de l'identifiant unique et de l'adresse de serveur.

12. Support de stockage lisible par ordinateur non transitoire, le support de stockage lisible par ordinateur enregistrant un programme informatique exécutable, le programme informatique exécutable étant chargé par un système d'authentification pour effectuer les étapes suivantes :
en réponse à la détermination qu'une fonction d'authentification d'une application sur un dispositif portable est déclenchée par un utilisateur, générer des informations d'authentification liées à une interface de connexion de portefeuille ;
envoyer les informations d'authentification à un dispositif intelligent et à un serveur correspondant à l'interface de connexion au portefeuille ;
en réponse à la réception des informations d'authentification, fournir au serveur des informations sur le portefeuille d'une application de portefeuille du dispositif intelligent, les informations d'authentification et les informations sur le portefeuille étant destinées à inciter le serveur à établir une correspondance entre le dispositif portable et le dispositif intelligent ; et
en réponse à la détermination de la correspondance entre le dispositif portable et le dispositif intelligent, la détermination de l'authentification de l'utilisateur ;
dans lequel les informations d'authentification comprennent un identifiant unique et une adresse de serveur ; et
dans lequel l'étape consistant à fournir au serveur les informations relatives au portefeuille de l'application de portefeuille de l'appareil intelligent consiste à l'envoi, par le dispositif intelligent, des informations de portefeuille de l'application de portefeuille au serveur sur la base de l'identifiant unique et de l'adresse du serveur.
